# EUROPEAN PATENT SPECIFICATION

(11) **EP 3 725 205 B1**
(45) Date of publication and mention of the grant of the patent: **25.10.2023**
(21) Application number: 19169842.2
(22) Date of filing: 17.04.2019
(51) Int. Cl.: A47L 9/28

(54) **VACUUM CLEANER**
STAUBSAUGER
ASPIRATEUR

(43) Date of publication of application: 21.10.2020
(73) Proprietor: Aktiebolaget Electrolux, 105 45 Stockholm (SE)
(72) Inventor: FAREMO, Simon, 105 45 Stockholm (SE); VÁMOS, Tamás, 105 45 Stockholm (SE)
(74) Representative: Electrolux Group Patents

(56) References cited:
- EP-A1- 0 365 191
- WO-A2-2006/072908
- DE-A1-102007 061 146
- DE-A1-102016 102 437
- DE-U1-202009 007 297

## Description

### TECHNICAL FIELD

The present disclosure relates to a vacuum cleaner capable of operating in an automatic mode.

### BACKGROUND

A vacuum cleaner, also known as a sweeper or hoover, is a device that uses a fan powered by a motor to create a partial vacuum to suck up dust and dirt from surfaces such as floors, carpets, furniture, and the like. The dust and dirt are collected by a separator unit, such as a dust bag or a cyclone, for later disposal.

In most vacuum cleaners, the power of the motor can be adjusted via an actuator, such as a knob, a button, or the like. In this manner, a user may select a power level of the motor in dependence of a cleaning need, and/or in dependence of type of surface to be cleaned. As an example, the user may select a lower power level when cleaning soft surfaces, such as carpets, furniture, curtains, and the like, and may select a higher power level when cleaning harder surfaces, such as floor surfaces, and the like.

Some premium vacuum cleaners, i.e. vacuum cleaners in a higher price segment, are provided with an automatic function capable of operating the motor in an automatic mode. Such an automatic function is capable of controlling the power of the motor without the intervention or input of a user, and instead normally uses input from a pressure sensor arranged to sense a pressure inside the vacuum cleaner. In this manner, the power of the motor can be regulated in dependence of a current flow resistance at a cleaning nozzle of the vacuum cleaner. This because the current flow resistance at a cleaning nozzle affects the pressure inside of the vacuum cleaner. As an example, if a user is cleaning a carpet and then moves the cleaning nozzle from the carpet to a harder floor surface, the automatic function can automatically adapt the power of the motor and thereby also the cleaning intensity.

An automatic function is convenient to use and provides several advantages. However, an automatic function of a vacuum cleaner also adds cost to the vacuum cleaner. Firstly, components are needed to achieve the automatic function, such as sensors, control arrangements, and the like. Secondly, components are needed to enable a user to activate the automatic function, such as one or more separate buttons, or the like. Thirdly, components are needed to inform the user about the activation state of the automatic function, i.e. one or more components arranged to inform the user of whether the automatic function is activated or deactivated, such as one or more displays, signalling lamps, or the like.

One known Vacuum cleaner is described in DE 10 2007 061146 and relates to a method for controlling a vacuum cleaner inter alia based on a particle signal (P). The particle signal (P) is generated by means of a sensor within a flow element and is at least dependent on the number of particles in a two-phase flow that occurs when cleaning a surface. Another vacuum cleaner is known from DE 10 2016 102437 and describes a vacuum cleaner with a drive unit and a unit for detecting and regulating an actual input power of the drive unit, with a device for displaying the actual input power and/or actual output depending on the actual input power operating states. Yet another vacuum cleaner is known from EP 365 191 which describes a variable power suction vacuum cleaner including a pressure switch at the entrance to a dust filter bag, and an air flow switch which measures the differential pressure between a point upstream of a diffuser of the fan, and a point within the body of the cleaner upstream of an exhaust filter. Signals from the pressure switches are compared with limit values stored within a microprocessor memory, to determine whether, for example, the bag is full or the suction hose is blocked.

All these types of components add manufacturing costs, as well as assembling costs, of a vacuum cleaner, and generally, on today's consumer market, it is an advantage if products, such as vacuum cleaners and their associated components, have conditions and/or characteristics suitable for being manufactured and assembled in a cost-efficient manner. Furthermore, generally, on today's consumer market, it is an advantage if products, such as vacuum cleaners, are simple and intuitive to use.

### SUMMARY

It is an object of the present invention to overcome, or at least alleviate, at least some of the above-mentioned problems and drawbacks.

According to an aspect of the invention, the object is achieved by a vacuum cleaner comprising a cleaning nozzle, a motor, a fan powered by the motor so as to generate a negative pressure at the cleaning nozzle, a control assembly configured to control the power generated by the motor, and an actuator connected to the control assembly. The actuator is movably arranged between at least two different positions, wherein the control assembly is configured to control the motor to at least two different power levels based on the position of the actuator. The actuator is movably arranged to a further position, wherein the control assembly is configured to operate the motor in an automatic mode when the actuator is in the further position.

As a result, a vacuum cleaner is provided in which the automatic mode can be activated simply by moving the actuator to the further position. Thereby, the need for one or more separate actuators is circumvented, such as buttons, knobs, or the like, for activating the automatic mode. This because one actuator is used to control the motor to at least two different power levels and for activating the automatic mode. As a further result thereof, a vacuum cleaner is provided being simple and intuitive to use.

Moreover, the need for one or more components arranged to inform the user about the activation state of the automatic mode is circumvented, such as one or more displays, lamps, or the like. This because a user of the vacuum cleaner may detect whether the automatic mode is activated or deactivated simply by looking at the position of the actuator.

Accordingly, a vacuum cleaner is provided capable of operating in an automatic mode while having conditions and characteristics suitable for being manufactured and assembled in a cost-efficient manner.

Accordingly, a vacuum cleaner is provided overcoming, or at least alleviating, at least some of the above-mentioned problems and drawbacks. As a result, the above-mentioned object is achieved.

Optionally, the vacuum cleaner comprises a pressure sensor arrangement configured to sense at least one pressure inside the vacuum cleaner, and wherein the control assembly is configured to, in the automatic mode, control the power of the motor based on data from the pressure sensor arrangement. Thereby, a simple and reliable arrangement is provided for operating the vacuum cleaner in an automatic mode in which the power of the motor, and thus also the cleaning intensity, is controlled in dependence of the pressure inside the vacuum cleaner, and thereby also in dependence of a current flow resistance at the cleaning nozzle of the vacuum cleaner.

Optionally, the vacuum cleaner comprises a main separator unit configured to separate particles from air flowing from the cleaning nozzle towards the fan, and wherein the pressure sensor arrangement comprises a first pressure sensor arranged upstream of the main separator unit. Thereby, an accurate control of the power of the motor is provided in dependence of the pressure inside the vacuum cleaner, and thereby also in dependence of a current flow resistance at the cleaning nozzle of the vacuum cleaner.

Optionally, the first pressure sensor comprises a digital pressure switch. Thereby, a simple and reliable solution is provided for sensing of the pressure inside the vacuum cleaner. Moreover, a vacuum cleaner is provided having conditions and characteristics suitable for being manufactured and assembled in a cost-efficient manner.

Optionally, the vacuum cleaner comprises a main separator unit configured to separate particles from air flowing from the cleaning nozzle towards the fan, and wherein the pressure sensor arrangement comprises a second pressure sensor arranged downstream of the main separator unit. Thereby, an accurate control of the power of the motor can be provided in dependence of the pressure inside the vacuum cleaner, and thereby also in dependence of a current flow resistance at the cleaning nozzle of the vacuum cleaner.

Optionally, the second pressure sensor comprises a digital pressure switch. Thereby, a simple and reliable solution is provided for sensing of the pressure inside the vacuum cleaner. Moreover, a vacuum cleaner is provided having conditions and characteristics suitable for being manufactured and assembled in a cost-efficient manner.

Optionally, the actuator is rotatably arranged between the at least two different positions and the further position. Thereby, a vacuum cleaner is provided being simple and intuitive to use. Moreover, a vacuum cleaner is provided having conditions and characteristics suitable for being manufactured and assembled in a cost-efficient manner.

Optionally, the control assembly comprises a potentiometer, wherein the actuator is connected to the potentiometer, and wherein the potentiometer is configured to control the motor to the at least two different power levels based on the position of the actuator. Thereby, a simple and a low-cost solution is provided for obtaining a control of the motor to the at least two different power levels based on the position of the actuator. Moreover, a vacuum cleaner is provided having conditions and characteristics suitable for being manufactured and assembled in a cost-efficient manner.

Optionally, the control assembly comprises a motor controller configured to operate the motor in the automatic mode. Thereby, an accurate control of the power of the motor can be provided in dependence of the pressure inside the vacuum cleaner, and thereby also in dependence of a current flow resistance at the cleaning nozzle of the vacuum cleaner.

Optionally, the motor controller is connected to the potentiometer, and wherein the motor controller is configured to operate the motor in the automatic mode when a voltage output of the potentiometer is within a predetermined range. Thereby, a vacuum cleaner is provided in which the motor controller uses the voltage output of the potentiometer as an input for activating the automatic mode. As a result, a simple and a low-cost solution is provided for obtaining an activation of the automatic mode.

Optionally, the potentiometer is configured to output a voltage within the predetermined range when the actuator is in the further position. Thereby, the automatic mode is activated in a simple and reliable manner when the actuator is moved to the further position.

Optionally, the vacuum cleaner is a canister vacuum cleaner or a stick-type vacuum cleaner. Thereby, a canister vacuum cleaner, or a stick-type vacuum cleaner, is provided capable of operating in an automatic mode while having conditions and characteristics suitable for being manufactured and assembled in a cost-efficient manner

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a top view of a vacuum cleaner according to some embodiments, and
Fig. 2 illustrates a side view of the vacuum cleaner illustrated in Fig. 1.

### DETAILED DESCRIPTION

Aspects of the present invention will now be described more fully. Like numbers refer to like elements throughout. Well-known functions or constructions will not necessarily be described in detail for brevity and/or clarity.

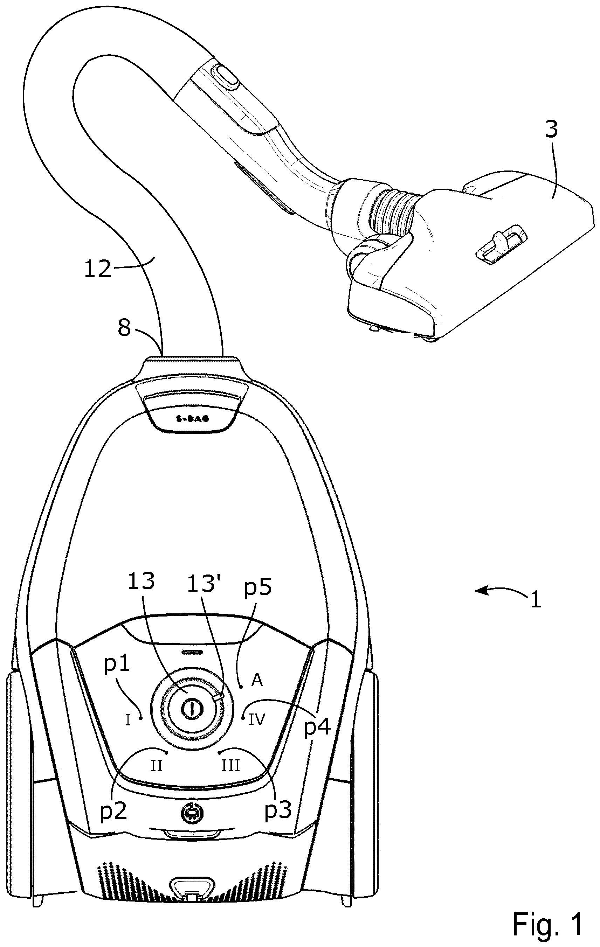

**Fig. 1** illustrates a top view of a vacuum cleaner 1 according to some embodiments. According to the illustrated embodiments, the vacuum cleaner 1 is a canister vacuum cleaner 1. According to further embodiments, the vacuum cleaner, as referred to herein may be a canister type vacuum cleaner, a stick-type vacuum cleaner, an upright vacuum cleaner, a drum vacuum cleaner, a hand-held vacuum cleaner, or the like.

The vacuum cleaner 1 comprises a cleaning nozzle 3, a motor, and a fan powered by the motor so as to generate a negative pressure, i.e. a partial vacuum, at the cleaning nozzle 3.

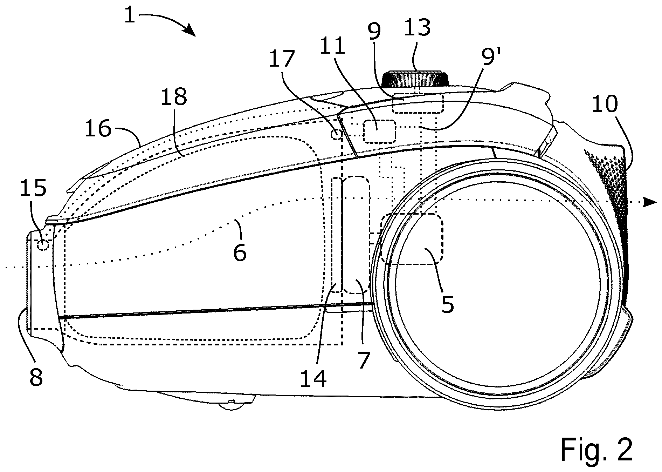

**Fig. 2** illustrates a side view of the vacuum cleaner 1 illustrated in Fig. 1. In Fig. 2, some components of the vacuum cleaner 1 is schematically indicated in dotted lines, such as the motor 5 and the fan 7. Below, simultaneous reference is made to Fig. 1 and Fig. 2. The motor 5 may comprise an electric motor and the fan 7 may comprise a centrifugal fan. The vacuum cleaner 1 comprises an air flow path 6 extending from an inlet aperture 8 to an air outlet 10 of the vacuum cleaner 1. According to the illustrated embodiments, a vacuum cleaner hose 12 is connectable to the inlet aperture 8, as illustrated in Fig. 1. The vacuum cleaner hose 12 is connected to the cleaning nozzle 3. The fan 7 is powered by the motor 5 so as to generate an air flow through the air flow path 6 in a direction from the inlet aperture 8 to the air outlet 10. In this manner, a negative pressure, i.e. a partial vacuum, is generated in the air flow path 6 upstream of the fan 7. Accordingly, during operation of the vacuum cleaner 1, a partial vacuum is generated at the inlet aperture 8, and at the cleaning nozzle 3 via the vacuum cleaner hose 12, when the cleaning nozzle 3 is connected to the inlet aperture 8, as depicted in Fig. 1. The magnitude of the partial vacuum generated in the air flow path 6 upstream of the fan 7 partly depends on the flow resistance at the cleaning nozzle 3 of the vacuum cleaner 1, as is further described herein.

As illustrated in Fig. 2, the vacuum cleaner 1 comprises a main separator unit 18 positioned in the air flow path 6 upstream of the fan 7. The main separator unit 18 is configured to separate particles for later disposal from air flowing through the air flow path 6. Thus, according to the illustrated embodiments, the main separator unit 18 is configured to separate particles from air flowing from the cleaning nozzle 3 towards the fan 7. According to the illustrated embodiments, the main separator unit 18 comprises a dust bag. According to further embodiments, the main separator unit 18 may comprise another type of separator unit, such as a cyclone separator, or the like. According to the illustrated embodiments, the vacuum cleaner 1 comprises a filter element 14 positioned in the air flow path 6 between the main separator unit 18 and the fan 7. The filter element 14 is removable to allow cleaning or replacement thereof. The vacuum cleaner 1 further comprises a lid 16 allowing access to the main separator unit 18 and to the filter element 14 when in an open position. The lid 16 is intended to be in a closed position, as illustrated in Fig. 1 and Fig. 2, during operation of the vacuum cleaner 1.

As indicated in Fig. 2, the vacuum cleaner 1 comprises a control assembly 9, 11. As is further explained herein, the control assembly 9, 11 is configured to control the power generated by the motor 5. Moreover the vacuum cleaner 1 comprises an actuator 13 connected to the control assembly 9, 11. The actuator 13 is movably arranged between at least two different positions, wherein the control assembly 9, 11 is configured to control the motor 5 to at least two different power levels based on the position of the actuator 13.

According to the illustrated embodiments, the control assembly 9, 11 comprises a potentiometer 9, wherein the actuator 13 is connected to the potentiometer 9, and wherein the potentiometer 9 is configured to control the motor 5 to the at least two different power levels based on the position of the actuator 13.

As best seen in Fig. 1, according to the illustrated embodiments, the actuator 13 is movably arranged between four different positions p1 - p4. The four different positions p1 - p4 comprise a first position P1 in which the control assembly 9, 11 is configured to control the motor 5 to a low power level. Moreover, the four different positions p1 - p4 comprise a second position P2 in which the control assembly 9, 11 is configured to control the motor 5 to a first medium power level being higher than the low power level. Furthermore, the four different positions p1 - p4 comprise a third position P3 in which the control assembly 9, 11 is configured to control the motor 5 to a second medium power level being higher than the first medium power level. Moreover, the four different positions p1 - p4 comprise a fourth position P4 in which the control assembly 9, 11 is configured to control the motor 5 to a high power level being higher than the second medium power level. In this manner, a user of the vacuum cleaner 1 can operate the vacuum cleaner 1 in a desired power level by moving the actuator 13 to one of the positions P1 - P4. According to some embodiments, the actuator 13 may be moveable also to positions between the four different positions p1 - p4 to allow a gradual control of the power of the motor 5. The actuator 13 may be configured to output a tactile output when being moved to one of the four different positions p1 - p4.

According to the embodiments illustrated in Fig. 1, each position P1 - P4 is provided with a symbol "I, II, III, IV" indicating the power level obtained when the actuator 13 is moved to the position P1 - P4. According to further embodiments, each position P1 - P4 may be provided with a picture or drawing indicating a suitable operation area for the power level obtained when the actuator 13 is moved to the position P1 - P4. As an example, instead of the symbol "I", the first position P1 may be provided with a picture or drawing illustrating one or more curtains. As an alternative, or in addition, the first position P1 may be provided with the text "MIN". As another example, instead of the symbol "II", the second position P2 may be provided with a picture or drawing illustrating a piece of furniture, such as an armchair. As a further example, instead of the symbol "III", the third position P3 may be provided with a picture or drawing illustrating an object with a soft surface, such as a carpet. As another example, instead of the symbol "IV", the fourth position P4 may be provided with a picture or drawing illustrating an object with a hard surface, such as a portion of a parquet floor, or the like. As an alternative, or in addition, the fourth position P4 may be provided with the text "MAX".

As can be seen in Fig. 1, the actuator 13 is movably arranged to and from a further position p5. According to embodiments of the present disclosure, the control assembly 9, 11, indicated in Fig. 2, is configured to operate the motor 5 in an automatic mode when the actuator 13 is in the further position p5. In this manner, in addition to the fix power levels obtainable at the positions P1 - P4, a user may in a simple and intuitive manner activate the automatic mode, by moving the actuator 13 to the further position P5. Thereby, the need for one or more separate actuators is circumvented, such as buttons, knobs, or the like, for activating the automatic mode. This because one actuator 13 can be used to control the motor 5 to at least two different power levels and for activating the automatic mode. As a further result thereof, a vacuum cleaner is 1 provided being simple and intuitive to use.

Moreover, the need for one or more components arranged to inform the user about the activation state of the automatic mode is circumvented, such as one or more displays, lamps, or the like. This because a user of the vacuum cleaner may detect whether the automatic mode is activated or deactivated simply by looking at the position of the actuator 13.

According to the embodiments illustrated in Fig. 1, the actuator 13 is rotatably arranged between the at least two different positions p1 - p4 and the further position p5. Moreover, the actuator 13 comprises a protrusion 13' for indicating the rotational position of the actuator 13. According to further embodiments, the actuator 13 may comprise a symbol, such as an arrow, for indicating the rotational position of the actuator 13. According to further embodiments, the actuator 13 may be movably arranged between the at least two different positions p1 - p4 and the further position p5 in another manner, such as linearly moveable, moveable along an arc-shaped track, or the like.

According to the embodiments illustrated in Fig. 1, the further position P5 is provided with a symbol "A" indicating the automatic mode is activated when the actuator 13 is moved to the further position P5. According to further embodiments, the further position P5 may be provided with the text "AUTO", and/or the text "SMART", for indicating the automatic mode is activated when the actuator 13 is moved to the further position P5. In embodiments where the actuator comprises four different fix positions P1 - P4 and one further position P5 activating the automatic mode, the further position P5 may be referred to as a fifth position P5. In embodiments where the actuator comprises three different fix positions and one further position activating the automatic mode, the further position may be referred to as a fourth position, etc. The actuator 13 may be configured to output a tactile output when being moved to the further position P5.

According to the illustrated embodiments, the control assembly 9, 11 comprises a motor controller 11 configured to operate the motor 5 in the automatic mode. The motor controller may comprise a bidirectional triode thyristor or bilateral triode thyristor, such as a TRIAC, from triode for alternating current, controlled by a microcontroller.

According to the illustrated embodiments, the motor controller 11 is connected to an output wire 9' of the potentiometer 9. Moreover, according to the illustrated embodiments, the potentiometer 9 is configured to output a voltage within a predetermined range when the actuator 13 is in the further position p5. Furthermore, the motor controller 11 is configured to operate the motor 5 in the automatic mode when a voltage output of the potentiometer 9 is within the predetermined range. Thus, due to these features, a cost-efficient solution is provided for activating the automatic mode.

The automatic mode, as referred to herein is an operation mode of the vacuum cleaner 1 in which the control assembly 9, 11 controls and adjusts the power of the motor 5 without the intervention or input of a user. The automatic mode may also be referred to as an automatic function. According to the illustrated embodiments, the vacuum cleaner 1 comprises a pressure sensor arrangement 15, 17 configured to sense at least one pressure inside the vacuum cleaner 1, and wherein the control assembly 9, 11 is configured to, in the automatic mode, control the power of the motor 5 based on data from the pressure sensor arrangement 15,17.

More specifically, according to the illustrated embodiments, the pressure sensor arrangement 15, 17 comprises a first pressure sensor 15 arranged upstream of the main separator unit 18. The first pressure sensor 15 is arranged to sense the pressure in the air flow path 6 upstream of the main separator unit 18. According to the illustrated embodiments, the first pressure sensor 15 is arranged in a region of the inlet aperture 8. According to further embodiments, the first pressure sensor 15 may be arranged at another position upstream of the main separator unit 18. According to the illustrated embodiments, the first pressure sensor 15 comprises a digital pressure switch. However, according to further embodiments, the first pressure sensor 15 may comprise another type of pressure sensor.

According to the illustrated embodiments, the motor controller 11 of the control assembly 9, 11 is configured to, in the automatic mode, control the power of the motor 5 based on data from the first pressure sensor 15. More specifically, according to the illustrated embodiments, the motor controller 11 is configured to, in the automatic mode, decrease the power of the motor 5 if data from the first pressure sensor 15 indicates that the pressure sensed by the first pressure sensor 15 is below a pressure threshold value. According to some embodiments, the motor controller 11 may be configured to, in the automatic mode, increase the power of the motor 5 in a gradual or step-wise manner until the pressure sensed by the first pressure sensor 15 reaches below the pressure threshold value. If data from the first pressure sensor 15 indicates that the pressure sensed by the first pressure sensor 15 reaches below the pressure threshold value, the motor controller 11 may cancel the gradual or step-wise increase in power of the motor 5 and initiate a gradual or step-wise decrease in power of the motor 5.

In this manner, the pressure at the position of the first pressure sensor 15, i.e. upstream of the main separator unit 18, will oscillate around the pressure threshold value during operation in the automatic mode. In this manner, an automatic control of the power of the motor 5 is obtained which controls the power of the motor 5 in dependence of a current pressure in a portion of the air flow path 6, and thus also in dependence of a current flow resistance at the cleaning nozzle 3. That is, due to these features, when cleaning a hard surface, such as a floor surface, a relatively low flow resistance at the cleaning nozzle 3 is provided which causes the motor controller 11 to increase the power of the motor 5. Thereby, a high air flow is provided through the cleaning nozzle 3 and the air flow path 6, when cleaning a hard surface, such as a floor surface. When cleaning a softer surface, such as a carpet, a higher flow resistance at the cleaning nozzle 3 is provided, consequently causing a lower pressure at the position of the first pressure sensor 15, which causes the motor controller 11 to decrease the power of the motor 5. Thereby, a lower motion resistance is provided between the cleaning nozzle 3 and a softer surface, such as a carpet, when operating the vacuum cleaner 1 in the automatic mode.

According to further embodiments of the present disclosure, the motor controller 11 may be configured to, in the automatic mode, increase the power of the motor 5 if data from the first pressure sensor 15 indicates that the pressure sensed by the first pressure sensor 15 is below a pressure threshold value. In this manner, an automatic control of the power of the motor 5 can be obtained which controls the power of the motor 5 in dependence of a current pressure in a portion of the air flow path 6, and thus also in dependence of a current flow resistance at the cleaning nozzle 3.

According to the illustrated embodiments, the pressure sensor arrangement 15, 17 comprises a second pressure sensor 17 arranged downstream of the main separator unit 18. The vacuum cleaner 1 may comprise the second pressure sensor 17 in addition to, or as an alternative to, the first pressure sensor 15. The second pressure sensor 17 is arranged to sense the pressure in the air flow path 6 downstream of the main separator unit 18 and upstream of the fan 7. According to the illustrated embodiments, the second pressure sensor 17 is arranged between the main separator unit 18 and the filter element 14. According to further embodiments, the second pressure sensor 17 may be arranged at another position in the air flow path 6 downstream of the main separator unit 18 and upstream of the fan 7.

According to the illustrated embodiments, the second pressure sensor 17 comprises a digital pressure switch. However, according to further embodiments, the second pressure sensor 17 may comprise another type of pressure sensor.

The motor controller 11 of the control assembly 9, 11 may be configured to, in the automatic mode, control the power of the motor 5 based on data from the second pressure sensor 17. More specifically, according to the illustrated embodiments, the motor controller 11 may be configured to, in the automatic mode, decrease the power of the motor 5 if data from the second pressure sensor 17 indicates that the pressure sensed by the second pressure sensor 17 is below a pressure threshold value. According to some embodiments, the motor controller 11 may be configured to, in the automatic mode, increase the power of the motor 5 in a gradual or step-wise manner until the pressure sensed by the second pressure sensor 17 reaches below the pressure threshold value. If data from the second pressure sensor 17 indicates that the pressure sensed by the second pressure sensor 17 reaches below the pressure threshold value, the motor controller 11 may cancel the gradual or step-wise increase in power of the motor 5 and initiate a gradual or step-wise decrease in power of the motor 5.

In this manner, the pressure at the position of the second pressure sensor 17, i.e. downstream of the main separator unit 18, will oscillate around the pressure threshold value during operation in the automatic mode. In this manner, an automatic control of the power of the motor 5 is obtained which controls the power of the motor 5 in dependence of a current pressure in a portion of the air flow path 6, and thus also in dependence of a current flow resistance at the cleaning nozzle 3. That is, due to these features, when cleaning a hard surface, such as a floor surface, a relatively low flow resistance at the cleaning nozzle 3 is provided which causes the motor controller 11 to increase the power of the motor 5. Thereby, a high air flow is provided through the cleaning nozzle 3 and the air flow path 6, when cleaning a hard surface, such as a floor surface. When cleaning a softer surface, such as a carpet, a higher flow resistance at the cleaning nozzle 3 is provided, consequently causing a lower pressure at the position of the second pressure sensor 17, which causes the motor controller 11 to decrease the power of the motor 5. Thereby, a lower motion resistance is provided between the cleaning nozzle 3 and a softer surface, such as a carpet when operating the vacuum cleaner 1 in the automatic mode.

According to further embodiments of the present disclosure, the motor controller 11 may be configured to, in the automatic mode, decrease the power of the motor 5 if data from the second pressure sensor 17 indicates that the pressure sensed by the second pressure sensor 17 is below a pressure threshold value. In this manner, an automatic control of the power of the motor 5 can be obtained which controls the power of the motor 5 in dependence of a current pressure in a portion of the air flow path 6, and thus also in dependence of a current flow resistance at the cleaning nozzle 3.

In embodiments where the pressure sensor arrangement 15, 17 comprises a first pressure sensor 15 arranged upstream of the main separator unit 18 and a second pressure sensor 17 arranged downstream of the main separator unit 18, data from the pressure sensor arrangement 15, 17 can be utilized to determine a fill level of the main separator unit 18.

The control of the power of the motor 5, as referred to herein, may comprise a control of the speed of the motor 5. Such a control may be performed in a gradual or step-wise manner by a software of the motor controller 11. The motor controller 11 may comprise a calculation unit which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression "calculation unit" may represent a processing circuitry comprising a plurality of processing circuits, such as, e.g., any, some or all of the ones mentioned above.

One skilled in the art will appreciate that the automatic mode may be implemented by programmed instructions. These programmed instructions are typically constituted by a computer program, which, when it is executed in the motor controller 11, ensures that the control arrangement carries out the desired control, such as the automatic mode described herein. The computer program is usually part of a computer program product which comprises a suitable digital storage medium on which the computer program is stored.

The motor controller 11 may further comprise a memory unit, wherein the calculation unit may be connected to the memory unit, which may provide the calculation unit with, for example, stored program code and/or stored data which the calculation unit may need to enable it to do calculations. The calculation unit may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, or another similar volatile or non-volatile storage unit for storing data.

As described above, the vacuum cleaner 1 may comprise a motor controller 11 but might alternatively be implemented wholly or partly in two or more motor controllers 11 or two or more control units.

According to the illustrated embodiments, electrical components of the vacuum cleaner 1, such as the motor 5, the control assembly 9, 11, and the pressure sensor arrangement 15, 17, are powered via a power cord of the vacuum cleaner 1. According to further embodiments, the vacuum cleaner 1 may comprise one or more batteries arranged to supply electricity to these components.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A vacuum cleaner (1) comprising:
- a cleaning nozzle (3),
- a motor (5),
- a fan (7) powered by the motor (5) so as to generate a negative pressure at the cleaning nozzle (3),
- a control assembly (9, 11) configured to control the power generated by the motor (5), and
- an actuator (13) connected to the control assembly (9, 11), **characterised in that** the actuator (13) is movably arranged between at least two different positions (p1 - p4),
the control assembly (9, 11) is configured to control the motor (5) to at least two different power levels based on the position (p1 - p4) of the actuator (13),
the actuator (13) is movably arranged to a further position (p5), **characterized in that**
the control assembly (9, 11) is configured to operate the motor (5) in an automatic mode when the actuator (13) is in the further position (p5).

2. The vacuum cleaner (1) according to claim 1, wherein the vacuum cleaner (1) comprises a pressure sensor arrangement (15, 17) configured to sense at least one pressure inside the vacuum cleaner (1), and wherein the control assembly (9, 11) is configured to, in the automatic mode, control the power of the motor (5) based on data from the pressure sensor arrangement (15, 17).

3. The vacuum cleaner (1) according to claim 2, wherein the vacuum cleaner (1) comprises a main separator unit (18) configured to separate particles from air flowing from the cleaning nozzle (3) towards the fan (7), and wherein the pressure sensor arrangement (15, 17) comprises a first pressure sensor (15) arranged upstream of the main separator unit (18).

4. The vacuum cleaner (1) according to claim 3, wherein the first pressure sensor (15) comprises a digital pressure switch.

5. The vacuum cleaner (1) according to any one of the claims 2 - 4, wherein the vacuum cleaner (1) comprises a main separator unit (18) configured to separate particles from air flowing from the cleaning nozzle (3) towards the fan (7), and wherein the pressure sensor arrangement (15, 17) comprises a second pressure sensor (17) arranged downstream of the main separator unit (18).

6. The vacuum cleaner (1) according to claim 5, wherein the second pressure sensor (17) comprises a digital pressure switch.

7. The vacuum cleaner (1) according to any one of the preceding claims, wherein the actuator (13) is rotatably arranged between the at least two different positions (p1 - p4) and the further position (p5).

8. The vacuum cleaner (1) according to any one of the preceding claims, wherein the control assembly (9, 11) comprises a potentiometer (9), wherein the actuator (13) is connected to the potentiometer (9), and wherein the potentiometer (9) is configured to control the motor (5) to the at least two different power levels based on the position (p1 - p4) of the actuator (13).

9. The vacuum cleaner (1) according to any one of the preceding claims, wherein the control assembly (9, 11) comprises a motor controller (11) configured to operate the motor (5) in the automatic mode.

10. The vacuum cleaner (1) according to claim 8 and 9, wherein the motor controller (11) is connected to the potentiometer (9), and wherein the motor controller (11) is configured to operate the motor (5) in the automatic mode when a voltage output of the potentiometer (9) is within a predetermined range.

11. The vacuum cleaner (1) according to claim 10, wherein the potentiometer (9) is configured to output a voltage within the predetermined range when the actuator (13) is in the further position (p5).

12. The vacuum cleaner (1) according to any one of the preceding claims, wherein the vacuum cleaner (1) is a canister vacuum cleaner (1) or a stick-type vacuum cleaner.

## Patentansprüche

1. Staubsauger (1), der Folgendes umfasst:
- eine Reinigungsdüse (3),
- einen Motor (5),
- ein Gebläse (7), angetrieben durch den Motor (5), um einen negativen Druck an der Reinigungsdüse (3) zu erzeugen,
- eine Steuerungsanordnung (9, 11), ausgelegt zum Steuern der durch den Motor (5) erzeugten Leistung, und
- einen Aktuator (13), verbunden mit der Steuerungsanordnung (9, 11), **dadurch gekennzeichnet, dass** der Aktuator (13) zwischen mindestens zwei unterschiedlichen Positionen (p1 - p4) bewegbar angeordnet ist,
wobei die Steuerungsanordnung (9, 11) ausgelegt ist zum Steuern der Motors (5) auf mindestens zwei unterschiedliche Leistungsniveaus basierend auf der Position (p1 - p4) des Aktuators (13),
wobei der Aktuator (13) auf eine weitere Position (p5) bewegbar angeordnet ist,
**dadurch gekennzeichnet, dass** die Steuerungsanordnung (9, 11) ausgelegt ist zum Betreiben des Motors (5) in einem automatischen Modus, wenn der Aktuator (13) in der weiteren Position (p5) ist.

2. Staubsauger (1) nach Anspruch 1, wobei der Staubsauger (1) eine Drucksensoranordnung (15, 17) umfasst, die ausgelegt ist zum Erfassen zumindest eines Druckes im Inneren des Staubsaugers (1), und wobei die Steuerungsanordnung (9, 11) ausgelegt ist zum, im automatischen Modus, Steuern der Leistung des Motors (5) basierend auf Daten von der Drucksensoranordnung (15, 17) .

3. Staubsauger (1) nach Anspruch 2, wobei der Staubsauger (1) eine Hauptabscheidereinheit (18) umfasst, die ausgelegt ist zum Abscheiden von Partikeln aus Luft, die von der Reinigungsdüse (3) in Richtung des Gebläses (7) strömt, und wobei die Drucksensoranordnung (15, 17) einen ersten Drucksensor (15) umfasst, der stromaufwärts der Hauptabscheidereinheit (18) angeordnet ist.

4. Staubsauger (1) nach Anspruch 3, wobei der erste Drucksensor (15) einen digitalen Druckschalter umfasst.

5. Staubsauger (1) nach einem der Ansprüche 2 - 4, wobei der Staubsauger (1) eine Hauptabscheidereinheit (18) umfasst, die ausgelegt ist zum Abscheiden von Partikeln aus Luft, die von der Reinigungsdüse (3) in Richtung des Gebläses (7) strömt, und wobei die Drucksensoranordnung (15, 17) einen zweiten Drucksensor (17) umfasst, der stromabwärts der Hauptabscheidereinheit (18) angeordnet ist.

6. Staubsauger (1) nach Anspruch 5, wobei der zweite Drucksensor (17) einen digitalen Druckschalter umfasst.

7. Staubsauger (1) nach einem der vorhergehenden Ansprüche, wobei der Aktuator (13) zwischen den mindestens zwei unterschiedlichen Positionen (p1 - p4) und der weiteren Position (p5) drehbar angeordnet ist.

8. Staubsauger (1) nach einem der vorhergehenden Ansprüche, wobei die Steuerungsanordnung (9, 11) ein Potentiometer (9) umfasst, wobei der Aktuator (13) mit dem Potentiometer (9) verbunden ist und wobei das Potentiometer (9) ausgelegt ist zum Steuern des Motors (5) auf die mindestens zwei unterschiedlichen Leistungsniveaus basierend auf der Position (p1 - p4) des Aktuators (13).

9. Staubsauger (1) nach einem der vorhergehenden Ansprüche, wobei die Steuerungsanordnung (9, 11) eine Motorsteuerung (11) umfasst, die ausgelegt ist zum Betreiben des Motors (5) im automatischen Modus.

10. Staubsauger (1) nach Anspruch 8 und 9, wobei die Motorsteuerung (11) mit dem Potentiometer (9) verbunden ist, und wobei die Motorsteuerung (11) ausgelegt ist zum Betreiben des Motors (5) im automatischen Modus, wenn ein Spannungsausgang des Potentiometers (9) innerhalb eines vorbestimmten Bereichs ist.

11. Staubsauger (1) nach Anspruch 10, wobei das Potentiometer (9) ausgelegt ist zum Ausgeben einer Spannung innerhalb des vorbestimmten Bereichs, wenn der Aktuator (13) in der weiteren Position (p5) ist.

12. Staubsauger (1) nach einem der vorhergehenden Ansprüche, wobei der Staubsauger (1) ein Bodenstaubsauger (1) oder ein Stabstaubsauger ist.

## Revendications

1. Aspirateur (1), comprenant :
- une buse de nettoyage (3),
- un moteur (5),
- un ventilateur (7) mû par le moteur (5) de manière à générer une pression négative au niveau de la buse de nettoyage (3),
- un ensemble de commande (9, 11) configuré pour commander la puissance générée par le moteur (5), et
- un actionneur (13) relié à l'ensemble de commande (9, 11), **caractérisé en ce que** l'actionneur (13) est agencé mobile entre au moins deux positions (p1 - p4) différentes,
l'ensemble de commande (9, 11) étant configuré pour commander le moteur (5) jusqu'à au moins deux niveaux de puissance différents sur la base de la position (p1 - p4) de l'actionneur (13),
l'actionneur (13) étant agencé mobile jusqu'à une position (p5) supplémentaire,
**caractérisé en ce que** l'ensemble de commande (9, 11) est configuré pour faire fonctionner le moteur (5) dans un mode automatique lorsque l'actionneur (13) occupe la position (p5) supplémentaire.

2. Aspirateur (1) selon la revendication 1, l'aspirateur (1) comprenant un agencement capteur de pression (15, 17) configuré pour capter au moins une pression à l'intérieur de l'aspirateur (1), et l'ensemble de commande (9, 11) étant configuré pour, dans le mode automatique, commander la puissance du moteur (5) sur la base de données provenant de l'agencement capteur de pression (15, 17).

3. Aspirateur (1) selon la revendication 2, l'aspirateur (1) comprenant une unité de séparation principale (18) configurée pour séparer des particules de l'air circulant depuis la buse de nettoyage (3) vers le ventilateur (7), et l'agencement capteur de pression (15, 17) comprenant un premier capteur de pression (15) agencé en amont de l'unité de séparation principale (18) .

4. Aspirateur (1) selon la revendication 3, le premier capteur de pression (15) comprenant un pressostat numérique.

5. Aspirateur (1) selon l'une quelconque des revendications 2 à 4, l'aspirateur (1) comprenant une unité de séparation principale (18) configurée pour séparer des particules de l'air circulant depuis la buse de nettoyage (3) vers le ventilateur (7), et l'agencement capteur de pression (15, 17) comprenant un deuxième capteur de pression (17) agencé en aval de l'unité de séparation principale (18).

6. Aspirateur (1) selon la revendication 5, le deuxième capteur de pression (17) comprenant un pressostat numérique.

7. Aspirateur (1) selon l'une quelconque des revendications précédentes, l'actionneur (13) étant agencé rotatif entre les au moins deux positions (p1 - p4) différentes et la position (p5) supplémentaire.

8. Aspirateur (1) selon l'une quelconque des revendications précédentes, l'ensemble de commande (9, 11) comprenant un potentiomètre (9), l'actionneur (13) étant relié au potentiomètre (9), et le potentiomètre (9) étant configuré pour commander le moteur (5) jusqu'à les au moins deux niveaux de puissance différents sur la base de la position (p1 - p4) de l'actionneur (13).

9. Aspirateur (1) selon l'une quelconque des revendications précédentes, l'ensemble de commande (9, 11) comprenant un contrôleur (11) de moteur configuré pour faire fonctionner le moteur (5) dans le mode automatique.

10. Aspirateur (1) selon la revendication 8 ou 9, le contrôleur (11) de moteur étant relié au potentiomètre (9), et le contrôleur (11) de moteur étant configuré pour faire fonctionner le moteur (5) dans le mode automatique lorsqu'une tension de sortie du potentiomètre (9) s'inscrit dans une plage prédéterminée.

11. Aspirateur (1) selon la revendication 10, le potentiomètre (9) étant configuré pour délivrer une tension dans la plage prédéterminée lorsque l'actionneur (13) occupe la position (p5) supplémentaire.

12. Aspirateur (1) selon l'une quelconque des revendications précédentes, l'aspirateur (1) étant un aspirateur-traîneau (1) ou un aspirateur-balai.
